# EUROPEAN PATENT APPLICATION

(11) **EP 3 422 433 A1**
(43) Date of publication of application: **02.01.2019**
(21) Application number: 17178736.9
(22) Date of filing: 29.06.2017
(51) Int. Cl.: H01M 2/02, G06F 1/16, H01M 2/10, H01M 2/30, H02J 7/00

(54) **BATTERY ARRANGEMENT AND ELECTRONIC DEVICE**

(71) Applicant: Vestel Elektronik Sanayi ve Ticaret A.S., 45030 Manisa (TR)
(72) Inventor: KURALAY, Fatih, 45030 Manisa (TR); DEMIR, Fatih, 45030 Manisa (TR)
(74) Representative: Ascherl, Andreas

(57) **Abstract**

The present invention provides a battery arrangement (100, 300, 400) comprising a single battery cell (101, 201) with an anode (103) and a cathode (102), at least two positive contacts (104, 105, 304, 305, 404, 405) that are electrically coupled to the cathode (102), and at least two negative contacts (106, 107, 306, 307, 406, 407) that are electrically coupled to the anode (103). Further, the present invention provides a respective electronic device (310, 410).

## Description

### TECHNICAL FIELD

The invention relates to a battery arrangement. Further, the present invention relates to an electronic device.

### BACKGROUND OF THE INVENTION

Although applicable to any battery powered electronic system, the present invention will mainly be described in conjunction with mobile electronic devices.

Modern mobile electronic devices, like e.g. smartphones, usually comprise a battery that provides the components of the mobile electronic device with the required electrical power. Increasing clock rates of e.g. processors and larger screens with high intensity back lights demand an ever increasing amount of electrical power for operation of electronic devices. Therefore, batteries with increasing capacities are provided in the electronic devices to provide for an increased time of operation of such devices.

However, batteries with large capacities require either a high charging current or have long charging duration. Charging controllers have been provided that increase the charging current for the battery of a mobile device. In conjunction with a high current power supply, the battery of the mobile device may therefore be charged with a higher current and therefore in shorter time.

However, simply increasing the charging current will cause thermal problems in the mobile device because the temperatures of the battery as well as the charging controller will significantly increase with increasing current.

Accordingly, there is a need for an improved energy management in electronic devices.

### SUMMARY OF THE INVENTION

The present invention provides a battery arrangement with the features of claim 1 and an electronic device with the features of claim 5.

Accordingly, it is provided:
A battery arrangement comprising a single battery cell with an anode and a cathode, at least two positive contacts that are electrically coupled to the cathode, and at least two negative contacts that are electrically coupled to the anode.

Further, it is provided:
An electronic device comprising a battery compartment configured to accommodate a battery arrangement according to any one of the preceding claims, and a charging controller for every pair of positive contacts and negative contacts of the battery arrangement.

The present invention is based on the fact that single cell batteries usually have only one positive contact and one negative contact. Batteries with a plurality of positive contacts and negative contacts comprise multiple battery cells and have one positive contact and one negative contact for every battery cell. The invention is further based on the finding that providing one pair of contacts per battery cell only allows arranging the battery with little flexibility.

Providing two cells in a single battery arrangement requires a mechanical housing and fixing elements that require space by themselves. Multiple cells in a battery arrangement therefore cause a waste of space that could otherwise be used to increase the cell size.

Therefore, the present invention provides the battery arrangement that comprises only a single battery cell. With the single battery cell the available space may be used to its maximum capacity.

The present invention further provides a plurality of positive contacts and negative contacts for this single battery cell. The battery cell may therefore be contacted by multiple contacts. Therefore, the current provided to the battery cell while charging the battery cell may be distributed over the multiple contacts. Since the multiple contacts provide distributed feeding points, no local hot spots will form in the battery cell, like e.g. with a single pair of contacts.

Further, in the electronic device that accommodates the single cell battery arrangement, a plurality of distributed charging controllers may be used. Charging controllers are one of the main heat sources in electronic devices during charging of the battery arrangement.

By distributing the charging controllers the heat sources in the electronic device may therefore be distributed and thermal management of the electronic device is greatly simplified.

It is understood, that the battery cell may be any type of rechargeable battery cell, like e.g. NiMH or Li-Ion or LiPo battery cells or the like. The electronic device may be any type of electronic device. However, the present invention may especially be applied to mobile electronic devices, like e.g. tablet PCs, smartphones or the like.

Further embodiments of the present invention are subject of the further subclaims and of the following description, referring to the drawings.

In one embodiment, the two positive contacts may arranged on different sides, especially ends, of the battery cell and may be coupled to the cathode on the respective sides, especially the respective ends.

In another embodiment, the two negative contacts may be arranged on different sides, especially ends, of the battery cell and may be coupled to the anode on the respective sides, especially the respective ends.

Usually, battery cells will have in a top view a rectangular or quadratic shape and a thickness ranging from some millimeters to a plurality of centimeters. The term side in this regard refers to any one of the four sides of the rectangular or quadratic shape in the top view.

With the positive and the negative contacts on different sides of the battery cell the distance of the charging controllers in the electronic device may be maximized. Therefore, the thermal management in the electronic device is optimized.

In one embodiment, the positive contacts and negative contacts may be arranged pair-wise on different sides of the battery cell.

Charging the battery cell requires access to the cathode and the anode by a single charging controller. Arranging the positive contacts and the negative contacts pair-wise therefore provides a compact access for every charging controller to the battery cell.

In a further embodiment, the electronic device may comprise a housing, wherein the battery compartment may be provided as a recess in the housing and may comprise a positive electrical contact for every positive contact of the battery arrangement and a negative electrical contact for every negative contact of the battery arrangement. Every charging controller may be coupled to a pair of one of the positive electrical contacts and one of the negative electrical contacts.

The housing of the electronic device may accommodate the battery compartment and the charging controllers as well as a plurality of electronic consumers. The battery compartment may e.g. be placed in the lower end of the housing, while the electronic consumers may be arranged in the upper end of the housing. Alternatively the battery compartment may be arranged on one side and the electronic consumers may be arranged on the other side. In any case usually the electronic consumers, like e.g. a processor or a communication transceiver, will be provided besides the battery compartment and not overlapping the batter compartment if possible.

The electrical contacts of the battery compartment may couple to the contacts of the battery arrangement when the battery is inserted into the compartment.

In one embodiment, the charging controllers may be arranged in the housing on the respective side of the battery compartment that comprises the positive electrical contact and the negative electrical contact that form the pair of contacts that is coupled to the respective charging controller.

As already explained above, the positive contacts and the negative contacts of the battery arrangement may be provided on different sides of the battery arrangement in pairs. If the charging controllers are placed in the housing on the respective sides of the battery compartment, the length of the traces between the battery controllers and the pairs of contacts in the battery compartment may be minimized. This further helps reducing EMI relevant emissions.

In another embodiment, a first one of the charging controllers may comprise a power manager that may be configured to manage the power distribution in the electronic device from the battery arrangement to electronic consumers in the electronic device.

If one of the charging controllers performs power management in the electronic device in addition to controlling the charging of the battery arrangement, no separate power manager will be necessary.

In a further embodiment, the electronic device may comprise a power port that may be coupled to the charging controllers and may be configured to connect to an external energy supply and receive electric energy for the charging controllers.

The external power port allows charging the electronic device with different power supplies that may be connected to the power port. The power port may e.g. be a USB-port or the like.

In one embodiment, the power port may be arranged on a first side of the battery compartment and the first charging controller may be arranged on a second side of the battery compartment.

The power port requires some mounting space in the housing of the electronic device. Further, the power port should be placed near the battery to provide short power traces. Since the further electronic consumers in the electronic device will also require a significant amount of mounting space, they may be provided opposite to the power port with the battery compartment in-between. Therefore, providing the first charging controller, that also performs the power management, opposed to the power port, will place the first charging controller near the relevant electronic consumers. This allows effectively coupling the first charging controller to the electronic consumers via short traces.

In another embodiment, at least a second one of the charging controllers may be arranged on the first side of the battery compartment.

The first side is the side of the power port. Providing one of the second charging controllers on the first side puts the charging controller in direct vicinity of the power port. The second charging controller may therefore directly receive the electrical power from the power port, without requiring long traces in the electronic device.

In one embodiment, the first side of the battery compartment may be opposite to the second side of the battery compartment, or on opposite sides of the battery compartment.

As already explained above, the power port may be provided on the first side of the battery compartment and the first charging controller with power management functions on the second side. The electronic consumers of the electronic device that are supplied by the first charging controller may therefore also mainly be arranged on the second side of the battery compartment. Therefore the available space in the electronic device may effectively be used.

In a further embodiment, the battery arrangement may be permanently installed in the battery compartment.

The electronic device may be of the type that does not allow opening the housing. The battery arrangement may therefore be permanently installed in the electronic device. Permanently in this regard refers to the battery arrangement not being easily releasable. It is however understood, that the battery arrangement may e.g. be removed or replaced with dedicated tools.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a battery arrangement according to the present invention;
Fig. 2 shows a block diagram of an embodiment of a battery arrangement with a single cell according to the present invention compared to a dual cell battery;
Fig. 3 shows a block diagram of an embodiment of an electronic device according to the present invention;
Fig. 4 shows a block diagram of an embodiment of an electronic device according to the present invention; and
Fig. 5 shows a block diagram of a known electronic device.

In the figures like reference signs denote like elements unless stated otherwise.

### DETAILED DESCRIPTION OF THE DRAWINGS

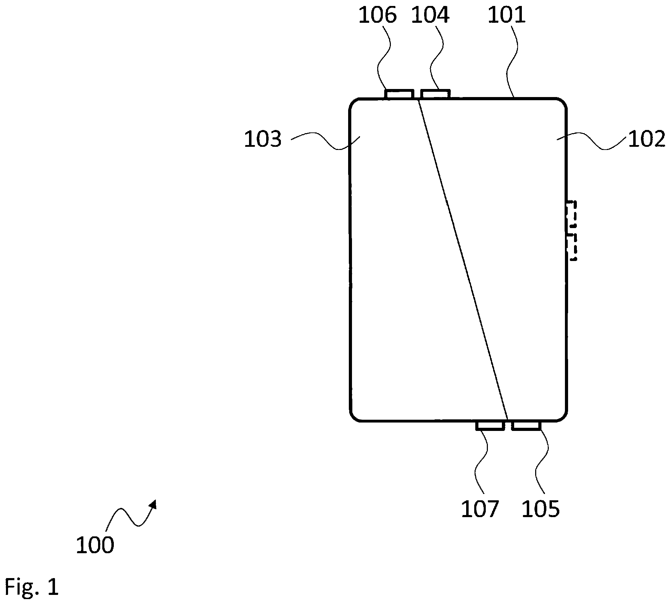

Fig. 1 shows a block diagram of a battery arrangement 100. The battery arrangement 100 comprises a battery cell 101. The battery cell 101 comprises a cathode 102 and an anode 103 that are just schematically denoted by a line that separates the battery cell 101 into two sections. The battery arrangement 100 further comprises two positive contacts 104, 105 and two negative contacts 106, 107. A pair of a positive contact 104 and a negative contact 106 is arranged on the top side of the battery cell 101. Further, a pair of a positive contact 105 and a negative contact 107 is arranged on the bottom side of the battery cell 101.

Further possible pairs of contacts are hinted at by dashed lines. It is understood, that the arrangement of the battery arrangement 100 is just schematically shown. Therefore, power lines or other electrical connections may e.g. be provided to connect the positive contacts 104, 105 and/or the negative contacts 106, 107 to the cathode 102 and the anode 103.

Further, it is understood that the battery arrangement 100 may e.g. comprise a housing that accommodates the anode 103 and the cathode 102. The housing may also accommodate the positive contacts 104, 105 and/or the negative contacts 106, 107 such that they become accessible from the outside. It is also understood, that the positive contacts 104, 105 and/or the negative contacts 106, 107 may be provided on other sides of the battery cell 101 and need not necessarily be on opposite sides.

The battery arrangement 100 allows electrically contacting the single battery cell 101 via different pairs of positive and negative contacts 104, 106 and 105, 107. Therefore, electrical energy may be provided or drawn from the battery arrangement 100 at different points, thereby distributing the currents flows.

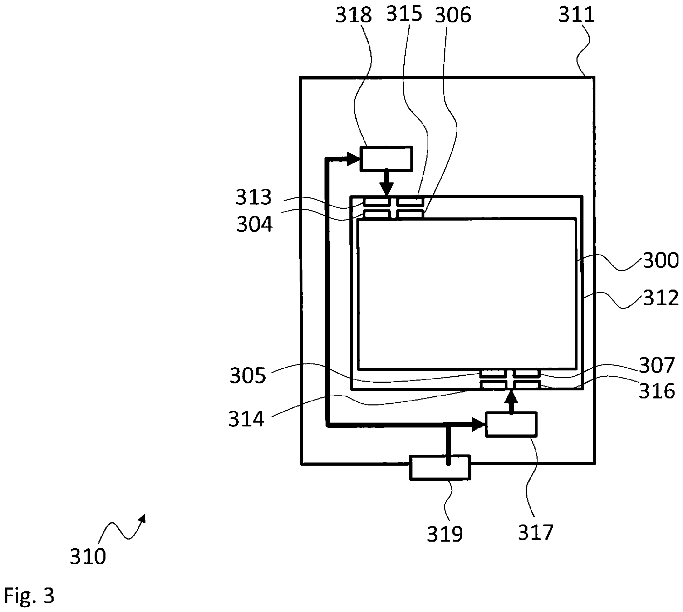

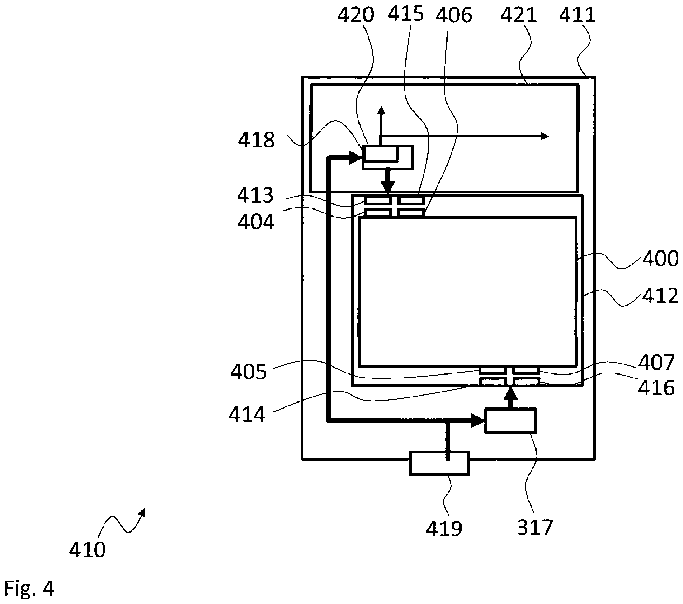

Further, in an electrical device (see e.g. Figs 3 and 4) the power ICs may be distributed in the electrical device to separate the heat sources and improve the thermal management of the devices.

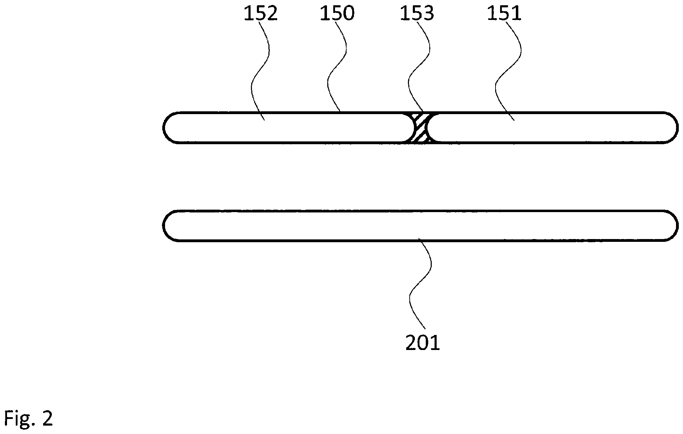

Fig. 2 shows a block diagram of an embodiment of a battery arrangement with a single cell 201 according to the present invention compared to a dual cell battery 150.

It can be seen that the battery 150 comprises two cells 151, 152. Due to the mechanical arrangement between these two cells 151, 152 a certain space 153 cannot be used. This space 153 is therefore a wasted space in the two-cell battery 150. Waste space 153 however means that this space cannot be used to accommodate the anode or cathode material of one of the cells 151, 152 and the overall capacity of the battery 150 is reduced.

The cell 201 in contrast uses the maximum available space. This means the cell 201 may comprise more anode or cathode material than the cells 151, 152 together. The capacity a battery with the single cell 201 will therefore be higher than the capacity of the battery 150.

Just as an example, the battery 150 may e.g. comprise a total capacity of 4000 mAh. In contrast a battery with a single cell 201 of the same size may e.g. comprise a total capacity of 4500 mAh.

Since in modern electronic devices the demand for electrical energy is high, usually a single cell battery will be preferred. Although without the present invention, thermal management of the electronic device will be more difficult.

Fig. 3 shows a block diagram of an electronic device 310. The electronic device 310 comprises a housing 311 with a battery compartment 312. In the battery compartment 312 a battery arrangement 300 is arranged. The battery arrangement may e.g. be a battery arrangement 300 as described in conjunction with Fig. 1. The battery arrangement 300 comprises positive contacts 304, 305 and negative contacts 306, 307, arranged in pairs. A pair of a positive contact 304 and a negative contact 306 is arranged on the upper side and a pair of a positive contact 305 and a negative contact 307 is arranged on the lower side.

The battery compartment 312 comprises corresponding positive electrical contacts 313, 314 and negative electrical contacts 315, 316. The positive electrical contacts 313, 314 and negative electrical contacts 315, 316 are also arranged in pairs and serve for contacting the pairs of contacts of the battery arrangement 300.

In the housing 311 there is also provided a power port 319 that may be connected to an external power supply. The electronic device 310 may receive electric energy to charge the battery arrangement 300 via the power port 319. Further, there are two charging controllers 317, 318 provided in the housing 311.

In the electronic device 310 the charging controller 317 is provided in the lower region of the housing 311, below the battery compartment 312. The charging controller 318 in contrast is provided in the upper region of the housing 311, above the battery compartment 312.

The arrangement of the electronic device 310 clearly shows that with the present invention electrical energy may be provided to the battery arrangement 300 from two sides. In addition, in the electronic device 310 the charging controllers 317, 318 may be provided spaced apart as far as possible. This allows distributing the heat sources, i.e. the charging controllers 317, 318, spaced apart as for as possible from each other.

Although not shown, a central controller may also be provided that manages the charging controllers 317, 318. Such a central controller may e.g. control the charging controller 317 to drain more energy from the power port 319 and provide a higher charging power to the battery arrangement 300 than the charging controller 318. The charging controller 318 is positioned above the battery compartment 312, where additional components of the electronic device 310 may be accommodated. Since such components may also generate heat, it may be advantageous to generate the majority of the charging-induced heat in the lower region of the electronic device 310.

Fig. 4 shows a block diagram of another electronic device 410. The electronic device 410 is based on the electronic device 310. Therefore, the electronic device 410 also comprises a housing 411 with a battery compartment 412. In the battery compartment 412 a battery arrangement 400 is arranged. The battery arrangement may e.g. be a battery arrangement 400 as described in conjunction with Fig. 1. The battery arrangement 400 comprises positive contacts 404, 405 and negative contacts 406, 407, arranged in pairs. A pair of a positive contact 404 and a negative contact 406 is arranged on the upper side and a pair of a positive contact 405 and a negative contact 407 is arranged on the lower side. The battery compartment 312 comprises corresponding positive electrical contacts 413, 414 and negative electrical contacts 415, 416. The positive electrical contacts 413, 414 and negative electrical contacts 415, 416 are also arranged in pairs and serve for contacting the pairs of contacts of the battery arrangement 400.

In the housing 411 there is also provided a power port 419 that may be connected to an external power supply. The electronic device 410 may receive electric energy to charge the battery arrangement 400 via the power port 419. Further, there are two charging controllers 417, 418 provided in the housing 411. The charging controller 417 is provided in the lower region of the housing 411 and the charging controller 418 in contrast is provided in the upper region of the housing 411, above the battery compartment 412.

The charging controller 418 comprises a power manager 420. The power manager 420 may e.g. perform the power management for further electrical consumers 421 in the electronic device 410. The electrical consumers 421 may e.g. comprise a main processor of the electronic device 410, a graphics processor of the electronic device 410, a communication controller and/or transceiver of the electronic device 410 or the like.

By integrating the power manager 420 into the charging controller 418, a dedicated power manager may be omitted. Further, the power management components that the charging controller 418 comprises for charging the electrical consumers 421 may be reused.

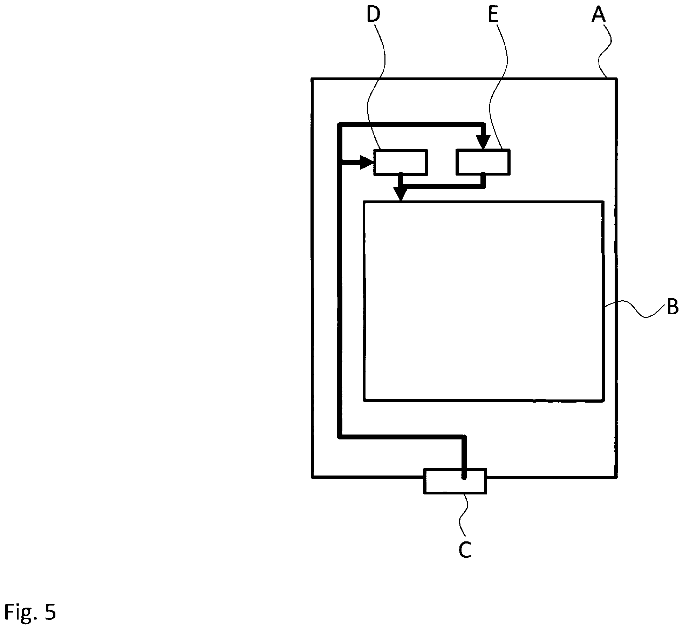

Fig. 5 shows a block diagram of a known electronic device A. In contrast to the present invention, the battery B of the electronic device A only comprises single contacts. This means that charging controllers D, E can only access the battery B via the same contacts. In the electronic device A the charging controllers D, E must both provided above the battery B, where the battery provides the contacts. Otherwise the power conducting traces would become very long and might cause problems with EMI or cause interferences in other elements of the electronic device A.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a battery arrangement 100, 300, 400 comprising a single battery cell 101, 201 with an anode 103 and a cathode 102, at least two positive contacts 104, 105, 304, 305, 404, 405 that are electrically coupled to the cathode 102, and at least two negative contacts 106, 107, 306, 307, 406, 407 that are electrically coupled to the anode 103. Further, the present invention provides a respective electronic device 310, 410.

### List of reference signs

- 100, 300, 400: battery arrangement
- 101, 201: battery cell
- 102: cathode
- 103: anode
- 104, 105, 304, 305, 404, 405: positive contact
- 106, 107, 306, 307, 406, 407: negative contact

- 310, 410: electronic device
- 311, 411: housing
- 312, 412: battery compartment
- 313, 314, 413, 414: positive electrical contact
- 315, 316, 415, 416: negative electrical contact
- 317, 318, 417, 418: charging controller
- 319, 419: power port

- 420: power manager
- 421: power consumers

- 150: battery
- 151, 152: battery cells
- 153: wasted space

- A: electronic device
- B: battery
- C: power port
- D, E: charging controller

## Claims

1. Battery arrangement (100, 300, 400) comprising:
a single battery cell (101, 201) with an anode (103) and a cathode (102),
at least two positive contacts (104, 105, 304, 305, 404, 405) that are electrically coupled to the cathode (102), and
at least two negative contacts (106, 107, 306, 307, 406, 407) that are electrically coupled to the anode (103).

2. Battery arrangement (100, 300, 400) according to claim 1, wherein the two positive contacts (104, 105, 304, 305, 404, 405) are arranged on different sides, especially ends, of the battery cell (101, 201) and are coupled to the cathode (102) on the respective sides, especially the respective ends.

3. Battery arrangement (100, 300, 400) according to any one of the preceding claims, wherein the two negative contacts (106, 107, 306, 307, 406, 407) are arranged on different sides, especially ends, of the battery cell (101, 201) and are coupled to the anode (103) on the respective sides, especially the respective ends.

4. Battery arrangement (100, 300, 400) according to any one of the preceding claims, wherein the positive contacts (104, 105, 304, 305, 404, 405) and negative contacts (106, 107, 306, 307, 406, 407) are arranged pair-wise on different sides of the battery cell (101, 201).

5. Electronic device (310, 410), comprising:
a battery compartment (312, 412) configured to accommodate a battery arrangement (100, 300, 400) according to any one of the preceding claims, and
a charging controller (317, 318, 417, 418) for every pair of positive contacts (104, 105, 304, 305, 404, 405) and negative contacts (106, 107, 306, 307, 406, 407) of the battery arrangement (100, 300, 400).

6. Electronic device (310, 410) according to claim 5, comprising a housing (311, 411), wherein the battery compartment (312, 412) is provided as a recess in the housing (311, 411) and comprises a positive electrical contact (313, 314, 413, 414) for every positive contact (104, 105, 304, 305, 404, 405) of the battery arrangement (100, 300, 400) and a negative electrical contact (315, 316, 415, 416) for every negative contact (106, 107, 306, 307, 406, 407) of the battery arrangement (100, 300, 400), wherein every charging controller (317, 318, 417, 418) is coupled to a pair of one of the positive electrical contacts (313, 314, 413, 414) and one of the negative electrical contacts (315, 316, 415, 416).

7. Electronic device (310, 410) according to claim 6, wherein the charging controllers (317, 318, 417, 418) are arranged in the housing (311, 411) on the respective side of the battery compartment (312, 412) that comprises the positive electrical contact (313, 314, 413, 414) and the negative electrical contact (315, 316, 415, 416) that form the pair of contacts that is coupled to the respective charging controller (317, 318, 417, 418).

8. Electronic device (310, 410) according to any one of claims 5 to 7, wherein a first one of the charging controllers (317, 318, 417, 418) comprises a power manager (420) that is configured to manage the power distribution in the electronic device (310, 410) from the battery arrangement (100, 300, 400) to electronic consumers in the electronic device (310, 410).

9. Electronic device (310, 410) according to any one of claims 5 to 8, comprising a power port (319, 419) that is coupled to the charging controllers (317, 318, 417, 418) and is configured to connect to an external energy supply and receive electric energy for the charging controllers (317, 318, 417, 418).

10. Electronic device (310, 410) according to claims 8 and 9, wherein power port (319, 419) is arranged on a first side of the battery compartment (312, 412) and the first charging controller (317, 318, 417, 418) is arranged on a second side of the battery compartment (312, 412).

11. Electronic device (310, 410) according to claim 10, wherein at least a second one of the charging controllers (317, 318, 417, 418) is arranged on the first side of the battery compartment (312, 412).

12. Electronic device (310, 410) according to any one of claims 10 and 11, wherein the first side of the battery compartment (312, 412) is opposite to the second side of the battery compartment (312, 412).

13. Electronic device (310, 410) according to any one of the claims 5 to 12, wherein the battery arrangement (100, 300, 400) is permanently installed in the battery compartment (312, 412).
